# FASCICULE DE BREVET EUROPEEN

(11) **EP 3 345 520 B1**
(45) Date de publication et mention de la délivrance du brevet: **29.09.2021**
(21) Numéro de dépôt: 18150280.8
(22) Date de dépôt: 04.01.2018
(51) Int. Cl.: A47J 45/07

(54) **POIGNEE AMOVIBLE MUNIE D'UN SYSTEME D'OUVERTURE AVEC UN BOUTON PIVOTANT**
ABNEHMBARER GRIFF, DER MIT EINEM ÖFFNUNGSSYSTEM MIT EINEM SCHWENKBAREN KNOPF AUSGESTATTET IST
REMOVABLE HANDLE PROVIDED WITH AN OPENING SYSTEM WITH A PIVOTING BUTTON

(30) Priorité: 06.01.2017 FR 1750125
(43) Date de publication de la demande: 11.07.2018
(73) Titulaire: SEB S.A., 69130 Ecully (FR)
(72) Inventeur: MONTGELARD, Michel, 73100 AIX LES BAINS (FR)
(74) Mandataire: SEB Développement

(56) Documents cités:
- WO-A1-2017/006040
- WO-A2-2010/098536
- DE-U1-202015 001 953
- KR-A- 20110 060 780

## Description

La présente invention concerne une poignée amovible destinée à coopérer avec un récipient de cuisson, le récipient de cuisson tel qu'une casserole ou un fait-tout ayant une paroi latérale qui est prolongée vers le haut par une portion recourbé vers l'extérieur.

On notera que, dans ce document, les termes «longitudinal», «transversal», «horizontal », «vertical», «inférieur», «supérieur», «haut», «bas», employés pour décrire la poignée amovible, font référence à cette poignée en situation d'usage, lorsqu'elle est montée sur une paroi latérale d'un récipient de cuisson, lequel est posé sur un plan horizontal.

Il est connu, du brevet KR101147113, une poignée amovible destinée à coopérer avec un récipient de cuisson ayant une paroi latérale, ladite poignée amovible s'étendant selon une direction longitudinale et comprenant au moins un organe d'appui fixe destiné à venir contre la paroi latérale et un organe de verrouillage, mobile entre une position ouverte dans laquelle la poignée amovible est désolidarisée de la paroi latérale et une position fermée dans laquelle la poignée amovible est immobilisée sur la paroi latérale, ladite poignée amovible comportant des moyens de déplacement de l'organe de verrouillage configurés de façon à pouvoir passer d'une position stable de fermeture à une position stable d'ouverture, et inversement, en passant par une position intermédiaire d'équilibre instable, et des moyens d'ouverture de l'organe de verrouillage destinés à entrainer les moyens de déplacement initialement dans leur position stable de fermeture au-delà de leur position intermédiaire d'équilibre instable, les moyen d'ouverture comportant un bouton d'ouverture mobile en rotation selon un axe, transversal à la direction longitudinale et contenu dans un plan horizontal. Le bouton d'ouverture est mobile entre une position relevée de repos dans laquelle les moyens de déplacement sont dans la position stable de fermeture et une position abaissée dans laquelle les moyens de déplacement sont dans la position stable d'ouverture. Ainsi, l'utilisateur appuie sur le bouton d'ouverture pour faire passer l'organe de verrouillage de la position fermée à la position ouverte lorsqu'il souhaite désassembler la poignée du récipient de cuisson.

Cependant, une telle poignée formant un ensemble relativement compact, la course du bouton d'ouverture est faible. Ainsi, les efforts d'appui sur le bouton d'ouverture nécessaires pour faire passer les moyens de déplacement de la position stable de fermeture au-delà de la position intermédiaire d'équilibre instable sont importants.

Une telle poignée comporte des moyens de déplacement de l'organe de verrouillage à genouillère comportant un levier et un ressort destiné à adapter la position de fermeture de l'organe de verrouillage à plusieurs épaisseurs de parois latérales. Le levier est mobile entre une position de fermeture et une position d'ouverture, en passant par une position intermédiaire instable. Lorsque l'épaisseur de la paroi latérale est proche du maximum admissible, les efforts d'appui sur le bouton d'ouverture nécessaires pour faire passer le levier de la position de fermeture au-delà de la position intermédiaire d'équilibre instable sont encore plus importants.

De plus, lors de la manipulation du récipient de cuisson sur lequel la poignée amovible est fixée, l'utilisateur peut appuyer accidentellement sur le bouton d'ouverture en saisissant la poignée amovible. Ainsi l'organe de verrouillage passe de la position fermée à la position ouverte et la poignée se détache du récipient de cuisson. En conséquence, une telle construction présente un risque de détachement de la poignée amovible du récipient de cuisson, ce qui peut entrainer des situations dangereuses pour l'utilisateur ou son environnement. Le document KR 2011 0060780 A divulgue une poignée amovible selon le préambule de la revendication 1.

Le but de la présente invention est de remédier aux inconvénients précités et de proposer une poignée amovible destinée à coopérer avec un récipient de cuisson présentant une ergonomie améliorée pour permettre à l'utilisateur d'assembler et de séparer facilement la poignée amovible du récipient de cuisson, ainsi que de manipuler le récipient de cuisson en toute sécurité.

Un autre but de l'invention est de proposer une poignée amovible qui soit de conception simple et économique à mettre en œuvre.

Ces buts sont atteints avec une poignée amovible destinée à coopérer avec un récipient de cuisson ayant une paroi latérale, ladite poignée amovible s'étendant selon une direction longitudinale et comprenant au moins un organe d'appui fixe destiné à venir contre la paroi latérale et un organe de verrouillage, mobile entre une position ouverte dans laquelle la poignée amovible est désolidarisée de la paroi latérale et une position fermée, dans laquelle la poignée amovible est immobilisée sur la paroi latérale, ladite poignée amovible comportant des moyens de déplacement de l'organe de verrouillage configurés de façon à pouvoir passer d'une position stable de fermeture à une position stable d'ouverture, et inversement, en passant par une position intermédiaire d'équilibre instable, et des moyens d'ouverture de l'organe de verrouillage destinés à entrainer les moyens de déplacement initialement dans leur position stable de fermeture au-delà de leur position intermédiaire d'équilibre instable, les moyens d'ouverture comportant un bouton d'ouverture mobile en rotation selon un axe, transversal à la direction longitudinale et contenu dans un plan horizontal, caractérisée en ce que ledit bouton d'ouverture est mobile entre une position abaissée de repos dans laquelle les moyens de déplacement sont dans la position stable de fermeture et une position relevée dans laquelle les moyens de déplacement sont dans la position stable d'ouverture.

Avec une telle construction, l'utilisateur doit relever le bouton d'ouverture vers le haut, lorsqu'il souhaite désassembler la poignée amovible du récipient de cuisson, pour le faire passer de la position abaissée de repos dans laquelle l'organe de verrouillage est en position fermée à la position relevée dans laquelle l'organe de verrouillage est en position ouverte. Ainsi, si l'utilisateur appuie par inadvertance sur le bouton d'ouverture, il ne risque pas de déverrouiller l'organe de verrouillage de la poignée amovible accidentellement.

De préférence, le bouton d'ouverture est mobile entre la position abaissée de repos et la position relevée en passant par une position relevée intermédiaire et les moyens d'ouverture comportent au moins un premier organe de poussée et au moins un deuxième organe de poussée. Le premier organe de poussée agit sur les moyens de déplacement entre sa position stable de fermeture et sa position intermédiaire d'équilibre instable lorsque le bouton d'ouverture est manœuvré de la position abaissée de repos à la position relevée intermédiaire et le deuxième organe de poussée agit sur les moyens de déplacement entre sa position intermédiaire d'équilibre instable et sa position stable d'ouverture lorsque le bouton est manœuvré de la position relevée intermédiaire à la position relevée.

Les deux organes de poussée pivotant selon l'axe transversal du bouton d'ouverture permettent d'avoir un déplacement important, en deux courses, des moyens de déplacement lorsque le bouton d'ouverture est manœuvré de la position abaissée de repos au-delà de la position relevée intermédiaire. La première course courte est provoquée par la rotation du premier organe de poussée et la deuxième course longue est provoquée par la rotation du deuxième organe de poussée.

Avantageusement, le premier organe de poussée est adapté, quand le bouton d'ouverture est soumis à l'action d'un couple fourni par l'utilisateur, à appliquer une première force sur les moyens de déplacement pour les faire passer de la position stable de fermeture à la position intermédiaire d'équilibre instable, et le deuxième organe de poussée est adapté, quand le bouton est soumis à l'action d'un couple fourni par l'utilisateur, à appliquer une deuxième force sur les moyens de déplacement pour les faire passer de la position intermédiaire d'équilibre instable à la position stable d'ouverture.

Ainsi, la première force générée par le premier organe de poussée provoque la première course courte dans laquelle le bouton d'ouverture est passé de sa position abaissée de repos à sa position relevée intermédiaire. La deuxième force générée par le deuxième organe de poussée provoque la deuxième course longue dans laquelle le bouton d'ouverture est passé de sa position relevée intermédiaire à sa position relevée.

De manière avantageuse, sous l'action d'un même couple fourni par l'utilisateur au bouton d'ouverture, la valeur de la première force appliquée sur les moyens de déplacement est supérieure à la valeur de la deuxième force appliquée sur les moyens de déplacement.

La première force nécessaire pour faire passer les moyens de déplacement de la position stable de fermeture à la position intermédiaire d'équilibre instable est importante et s'applique sur la première course courte des moyens de déplacement. La deuxième force nécessaire pour faire passer les moyens de déplacement de la position intermédiaire d'équilibre instable à la position stable d'ouverture est inférieure à la première force et s'applique sur une deuxième course longue des moyens de déplacement.

De préférence, les premier et deuxième organes de poussée, quand ils sont déplacés sous l'action d'un utilisateur via le bouton d'ouverture, sont adaptés à venir respectivement en contact contre des première et deuxième surfaces de réception portées par les moyens de déplacement et à déplacer respectivement les première et deuxième surfaces de réception de façon à entraîner les moyens de déplacement vers leur position stable d'ouverture.

Ainsi, le premier organe de poussée agit sur la première surface de réception permettant d'entrainer les moyens de déplacement à leur position intermédiaire d'équilibre instable depuis leur position stable de fermeture. Le deuxième organe de poussée agit sur la deuxième surface de réception permettant d'entrainer les moyens de déplacement à leur position stable d'ouverture depuis leur position intermédiaire d'équilibre instable.

Avantageusement, les premier et deuxième organes de poussée sont agencés de part et d'autre du bouton d'ouverture le long de l'axe transversal.

Les premier et deuxième organes de poussée sont entrainés en rotation selon l'axe transversal avec le bouton d'ouverture, sous l'action d'un couple fourni par l'utilisateur.

Dans une réalisation préférentielle, le premier et le deuxième organe de poussée comportent respectivement un bras de levier court et un bras de levier long, et le bras de levier court est adapté à appliquer la première force sur les moyens de déplacement et le bras de levier long est adapté à appliquer la deuxième force sur les moyens de déplacement.

Un couple fourni par l'utilisateur sur le bouton d'ouverture, lorsqu'il est déplacé de sa position abaissée de repos à sa position relevée intermédiaire, est transmis par le bras de levier court pour appliquer, sur la première course courte, la première force importante sur les moyens de déplacement pour les faire passer de la position stable de fermeture à la position intermédiaire d'équilibre instable. Le même couple fourni par l'utilisateur sur le bouton d'ouverture, lorsqu'il est déplacé de sa position relevée intermédiaire à sa position relevée, est transmis par le bras de levier long pour appliquer, sur la deuxième course longue, la deuxième force plus faible mais suffisante sur les moyens de déplacement pour les faire passer de la position intermédiaire d'équilibre instable à la position stable d'ouverture.

De manière avantageuse, le bras de levier court comprend une première extrémité d'entraînement profilée adaptée pour assurer le contact avec la première surface de réception et le bras de levier long comprend une deuxième extrémité adaptée pour assurer le contact avec la deuxième surface de réception.

La première extrémité d'entraînement profilée du bras de levier court est adaptée à venir en contact contre la première surface de réception portée par les moyens de déplacement et à déplacer cette première surface de réception de façon à entraîner les moyens de déplacement dans leur position intermédiaire d'équilibre instable. La deuxième extrémité d'entraînement profilée du bras de levier long est adaptée à venir en contact contre la deuxième surface de réception portée par les moyens de déplacement et à déplacer cette deuxième surface de réception de façon à entraîner les moyens de déplacement dans leur position stable d'ouverture.

Dans une réalisation préférentielle, le premier et le deuxième organe de poussée comportent respectivement une came courte et une came longue, la came courte étant adaptée à appliquer la première force sur les moyens de déplacement, et la came longue étant adaptée à appliquer la deuxième force sur les moyens de déplacement.

Par came, on comprend un cylindre de rayon variable entraîné en rotation par le bouton d'ouverture. La came courte présente un rayon maximum R1 et la came longue présente un rayon maximum R2, R2 étant supérieur à R1.

Ainsi, un couple fourni par l'utilisateur sur le bouton d'ouverture, lorsqu'il est déplacé de sa position abaissée de repos à sa position relevée intermédiaire, est transmis par la came courte pour appliquer, sur la première course courte, la première force importante sur les moyens de déplacement pour les faire passer de la position stable de fermeture à la position intermédiaire d'équilibre instable. Le même couple fourni par l'utilisateur sur le bouton d'ouverture, lorsqu'il est déplacé de sa position relevée intermédiaire à sa position relevée, est transmis par la came longue pour appliquer, sur la deuxième course longue, la deuxième force plus faible mais suffisante sur les moyens de déplacement pour les faire passer de la position intermédiaire d'équilibre instable à la position stable d'ouverture.

Avantageusement, les moyens de déplacement comprennent un levier mobile selon un axe de pivotement s'étendant selon une direction transversale à la direction longitudinale, entre une position de fermeture et une position d'ouverture en passant par une position intermédiaire d'équilibre instable.

La position de fermeture, d'ouverture et la position intermédiaire d'équilibre instable du levier correspondent, respectivement, à la position stable de fermeture, d'ouverture et la position intermédiaire d'équilibre instable des moyens de déplacement. Un tel levier mobile permet d'obtenir des moyens de déplacement de l'organe de verrouillage simples et faciles à manœuvrer.

De manière avantageuse, les première et deuxième surfaces de réception sont portées par le levier.

Ainsi, les premier et deuxième organes de poussée agissent directement sur le levier.

De préférence, le bouton d'ouverture est pivotant sur une course angulaire entre la position abaissée de repos et la position relevée comprise entre 40° et 70°, de préférence 60° par rapport à la direction longitudinale.

Ainsi, le bouton d'ouverture est sensiblement vertical dans sa position relevée et l'agencement du bouton d'ouverture présente une position ergonomique telle que l'utilisateur peut poser son pouce sur le bouton d'ouverture dans sa position abaissée de repos.

Avantageusement, les moyens de déplacement comportent une bielle reliée à l'organe de verrouillage et un ressort relié à la bielle, le ressort étant destiné à adapter la position de l'organe de verrouillage à l'épaisseur de la paroi latérale.

La bielle permet le déplacement en translation de l'organe de verrouillage quand le levier est pivoté. Cette disposition permet d'obtenir des moyens de déplacement de l'organe de verrouillage très ergonomique. De plus de tels moyens permettent d'adapter la position de l'organe de verrouillage à l'épaisseur de la paroi latérale.

De préférence, la poignée amovible comprend au moins deux organes d'appui fixes destinés à venir contre la paroi latérale et un organe de verrouillage, mobile entre une position ouverte dans laquelle la paroi latérale est susceptible de s'engager entre les au moins deux organes d'appui et une position fermée, dans laquelle la paroi latérale est enserrée entre les au moins deux organes d'appui de manière à immobiliser la poignée amovible sur la paroi latérale.

L'organe de verrouillage est mobile en translation selon la direction longitudinale. Il est adapté à être éloigné des au moins deux organes d'appui, dans sa position ouverte, permettant l'introduction de la paroi latérale entre les au moins deux organes d'appui, et à venir en contact contre la paroi latérale, dans sa position fermée, permettant de l'immobiliser sur les au moins deux organes d'appui.

Dans la position ouverte de l'organe de verrouillage, les au moins deux organes d'appui permettent l'introduction de la paroi latérale entre les au moins deux organes.

Le corps de préhension peut être tenu dans la paume de l'utilisateur et l'utilisateur peut poser son pouce sur le bouton d'ouverture dans sa position abaissée de repos et le relever avec son pouce pour déverrouiller la poignée amovible.

L'invention concerne également un ensemble formé par au moins un récipient de cuisson comportant une paroi latérale qui est prolongée vers le haut par un rebord recourbé vers l'extérieur et une poignée amovible telle que précédemment décrite. Dans une variante de réalisation, le rebord recourbé comporte une portion intermédiaire verticale et un bord d'extrémité.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'une poignée amovible coopérant avec un récipient de cuisson selon un mode particulier de réalisation de l'invention,
- la figure 2 est une autre vue en perspective de la figure 1,
- la figure 3 est une vue en coupe de la poignée amovible suivant le plan de coupe III-III de la figure 1,
- la figure 4 est une vue en perspective de la poignée amovible de la figure 1, le bouton d'ouverture étant en position relevée,
- la figure 5 est une vue du dessus de la poignée amovible de la figure 4,
- la figure 6 est une vue en éclaté de la poignée amovible de la figure 1,
- la figure 7 est une vue de face illustrant le bouton d'ouverture et les moyens de déplacement de la poignée amovible de la figure 1, le bouton d'ouverture étant en position abaissée de repos et les moyens de déplacement étant en position stable de fermeture,
- la figure 8 est une vue de face illustrant le bouton d'ouverture et les moyens de déplacement de la poignée amovible de la figure 1, le bouton d'ouverture étant en position relevée intermédiaire et les moyens de déplacement étant en position intermédiaire d'équilibre instable,
- la figure 9 est une vue de face illustrant le bouton d'ouverture et les moyens de déplacement de la poignée amovible de la figure 1, le bouton d'ouverture étant en position relevée et les moyens de déplacement étant en position stable d'ouverture,

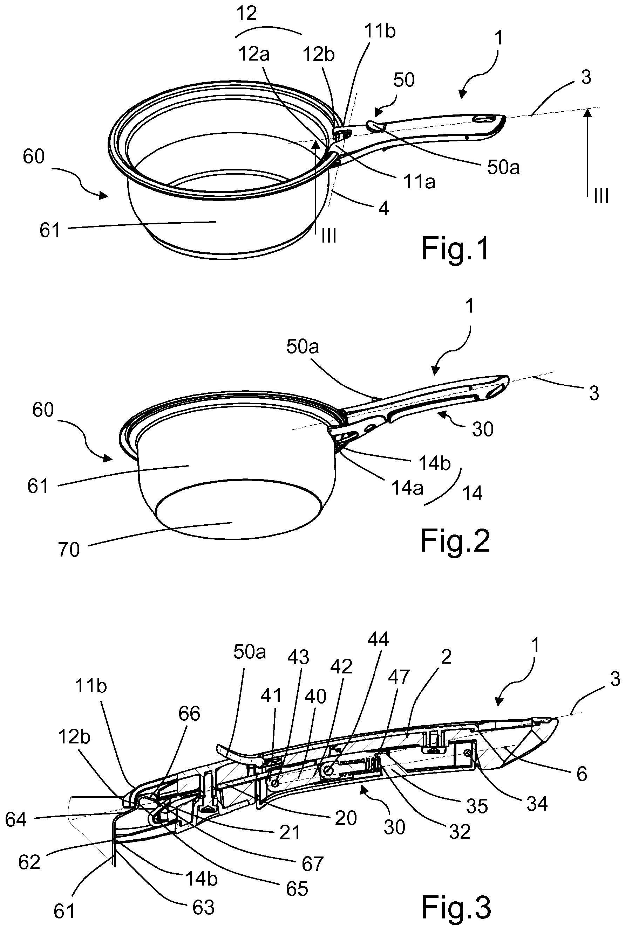

Tel qu'illustré aux figures 1 et 2, une poignée amovible 1 est destinée à coopérer avec un récipient de cuisson 60 qui comprend une paroi de fond horizontale 70 et une paroi latérale 61 se dressant depuis la paroi de fond horizontale 70 et prolongée vers le haut par un rebord recourbé 64 qui s'étend vers l'extérieur. La paroi latérale 61 comporte une surface intérieure 62 et une surface extérieure 63. Le rebord recourbé 64 prolonge la paroi latérale 61 et délimite l'ouverture supérieure du récipient de cuisson 60. Le rebord recourbé 64 comprend une portion intermédiaire verticale 65 et un bord d'extrémité 66 muni d'une extrémité libre tombante 67.

Conformément aux figures 1 à 6, la poignée amovible 1 comporte un corps de préhension 2 sur lequel est agencé une pièce de structure 10. La poignée amovible 1 s'étend selon une direction longitudinale 3. La pièce de structure 10 est une pièce métallique qui comporte à une extrémité deux pattes latérales 11a, 11b. Les deux pattes latérales 11a, 11b sont agencées à l'extrémité de la pièce de structure 10 dans une direction transversale à la direction longitudinale 3. Les deux pattes latérales 11a, 11b s'étendent vers le bas et comportent à leur extrémité respective, des première et deuxième zones d'appui internes 12a, 12b formant un organe d'appui interne 12 destiné à coopérer avec la portion intermédiaire verticale 65 du rebord recourbé de la paroi latérale 61.

Tel qu'illustré aux figures 3 à 5, la poignée amovible comporte un organe d'appui externe 14 comportant des première et deuxième zones d'appui externes 14a, 14b destinées à coopérer avec la surface extérieure 63 de la paroi latérale 61.

Les première et deuxième zones d'appui internes 12a, 12b formant l'organe d'appui interne 12 et les première et deuxième zones d'appui externes 14a, 14b formant l'organe d'appui externe 14 sont décalées selon un axe vertical pour permettre l'introduction de la paroi latérale 61 et du rebord recourbé 64 lors de l'assemblage de la poignée amovible 1 sur le récipient de cuisson 60.

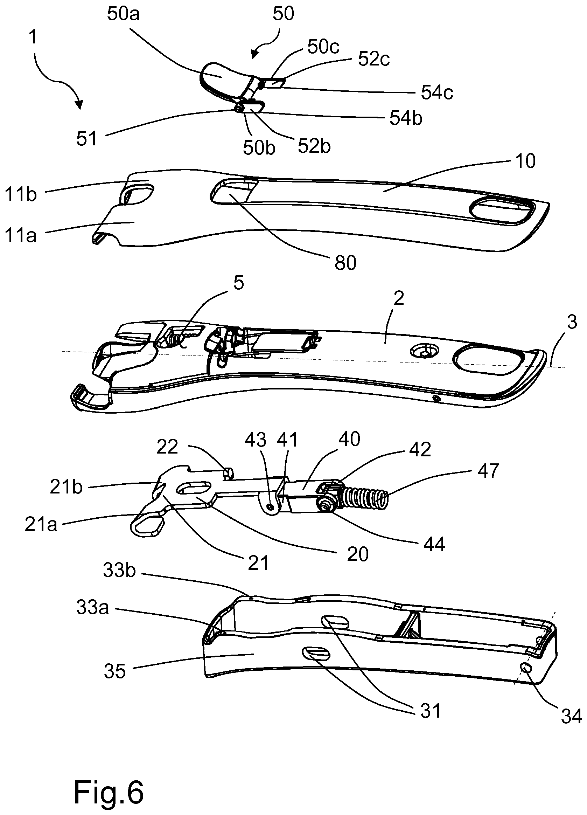

Conformément aux figures 3 et 6, la poignée amovible 1 comporte un organe de verrouillage formé par un verrou 20 mobile en translation selon la direction longitudinale 3 entre une position ouverte et une position fermée. Le verrou 20 comporte une paroi de blocage 21 comprenant des première et deuxième parties d'appui 21a, 21b (figure 6) dans la direction transversale 4 à la direction longitudinale 3.

Dans la position ouverte du verrou 20, les première et deuxième parties d'appui 21a, 21b formant la paroi de blocage 21 sont destinées à être éloignées de l'organe d'appui interne 12 pour permettre l'introduction de la paroi latérale 61 entre les organes d'appui interne 12 et externe 14 et permettre aux zones d'appui internes 12a, 12b de venir contre la portion intermédiaire verticale 65 du rebord recourbé 64, aussi pour permettre aux zones d'appui externes 14a, 14b de venir contre la surface extérieure 63 de la paroi latérale 61.

Dans la position fermée du verrou 20, les première et deuxième parties d'appui 21a, 21b formant la paroi de blocage 21 sont destinées à prendre appui contre l'extrémité libre tombante 67 et ainsi bloquer l'extrémité libre tombante 67 contre la paroi de blocage 21.

Conformément aux figures 3 à 6, la poignée amovible 1 comporte des moyens de déplacement 30 de l'organe de verrouillage formé par le verrou 20 configurés de façon à pourvoir passer d'une position stable de fermeture à une position stable d'ouverture en passant par une position intermédiaire d'équilibre instable. Les moyens de déplacement 30 comportent un levier 35 qui est monté pivotant sur le corps de préhension 2 selon un axe de pivotement 34 s'étendant selon la direction transversale 4 à la direction longitudinale 3, et une bielle 40 qui permet le déplacement du verrou 20 quand le levier 35 est pivoté. La bielle 40 est montée de façon pivotante, par une première extrémité 41 au verrou 20 selon un axe 43, et par une seconde extrémité 42 au levier 35 selon un axe 44 qui est monté coulissant dans des ouvertures oblongues 31 réalisées dans le levier 35.

Le levier 35 est mobile en rotation selon l'axe de pivotement 34 entre une position de fermeture et une position d'ouverture en passant par une position intermédiaire d'équilibre instable. En outre, les moyens de déplacement comprennent également un ressort 47 de compression qui est disposé entre l'axe 44 monté coulissant et une paroi transversale 32 du levier 35. Ce ressort 47 de compression permet un ajustement de la position du verrou 20 en position fermée en fonction de la géométrie du rebord recourbé 64 du récipient de cuisson 60.

Conformément à la figure 3, dans la position de fermeture du levier 35, l'axe 44 autour duquel la seconde extrémité 42 pivote est situé au-dessus d'une ligne 6 passant par l'axe de pivotement 34 et l'axe 43. La seconde extrémité 42 est maintenue en contact contre une paroi interne du corps de préhension 2 sous l'action du ressort 47 de compression. Ainsi, le verrou 20 reste naturellement dans sa position fermée, sans que l'utilisateur ait à maintenir un quelconque effort sur la poignée amovible 1. Le levier 35 est amené au-delà de sa position intermédiaire d'équilibre instable lorsque l'axe 44 autour duquel la seconde extrémité 42 pivote est déplacé sous la ligne passant par l'axe de pivotement 34 et l'axe 43.

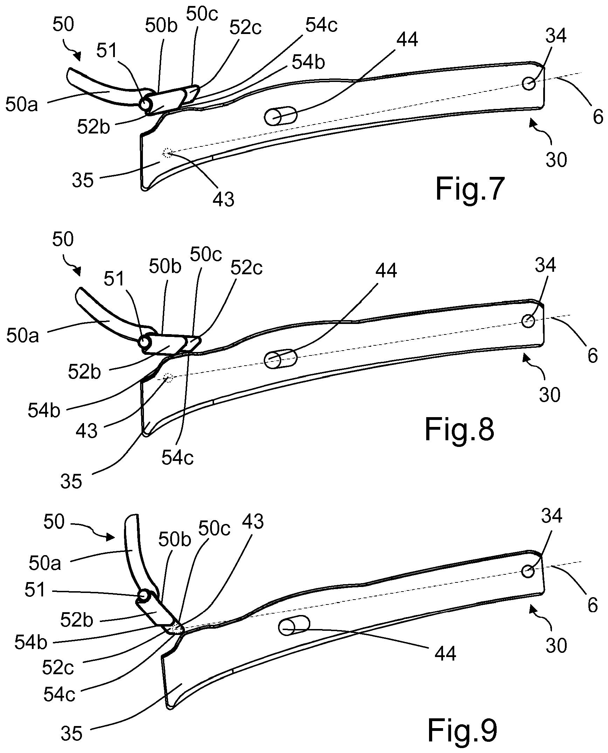

Tel que visible sur les figures 1 à 6, la poignée amovible 1 comprend des moyens d'ouverture 50 qui permettent de faire passer les moyens de déplacement 30 initialement dans leur position stable de fermeture au-delà de leur position intermédiaire d'équilibre instable. Les moyens d'ouverture 50 comprennent un bouton d'ouverture 50a agencé dans une ouverture 80 de la pièce de structure 10 et sur une face supérieure du corps de préhension 2. Le bouton d'ouverture 50a est mobile en rotation autour d'un axe transversal 51, horizontal à la direction longitudinale 3 de la poignée amovible 1. Tel qu'illustré aux figures 7 à 9, le bouton d'ouverture 50a est mobile entre une position abaissée de repos (figure 7) dans laquelle le levier 35 est dans sa position de fermeture, une position relevée intermédiaire (figure 8) dans laquelle le levier 35 est dans sa position intermédiaire d'équilibre instable et une position relevée (figure 9) dans laquelle le levier 35 est dans sa position d'ouverture.

Tel que visible à la figure 6, la poignée amovible 1 comporte un moyen de rappel 5 du verrou 20 disposé entre une paroi interne du corps de préhension 2 et une butée 22 portée par le verrou 20. Le moyen de rappel 5 travaille en compression lorsque le verrou 20 est en position fermée et est adapté à appliquer une force de rappel sur la butée 22 pour entraîner le verrou 20 vers sa position ouverte lorsque le levier 35 est entraîné vers sa position complètement ouverte.

Conformément à la figure 6, les moyens d'ouverture 50 comportent des premier et deuxième organes de poussée 50b, 50c mobiles en rotation avec le bouton d'ouverture 50a selon l'axe transversal 51. Les premier et deuxième organes de poussée 50b, 50c sont agencés en saillie de part et d'autre du bouton d'ouverture 50a dans la direction transversale 4. Les premier et deuxième organes de poussée 50b, 50c comportent respectivement un bras de levier court 52b et un bras de levier long 52c qui comprennent respectivement des première et deuxième extrémités d'entrainement profilées 54b, 54c. Le levier 35 comporte des première et deuxième surfaces de réception 33a, 33b destinées à coopérer avec les première et deuxième extrémités d'entrainement profilées 54b, 54c.

Tel que visible aux figures 7 et 8, la première extrémité d'entrainement profilée 54b du bras de levier court 52b est adaptée à venir en contact contre la première surface de réception 33a portée par le levier 35 et provoque une première course courte du levier 35 lorsque le bouton d'ouverture 50a est manœuvré de la position abaissée de repos (cf. figure 7) à la position relevée intermédiaire (cf. figure 8). Le bras de levier court 52b est adapté à appliquer, sur la première course courte, une première force sur la première surface de réception 33a pour faire déplacer les moyens de déplacement de leur position stable de fermeture à leur position intermédiaire d'équilibre instable. Conformément à la figure 7, dans la position abaissée de repos du bouton d'ouverture 50a, l'axe 44 autour duquel la seconde extrémité 42 de la bielle 40 pivote est situé au-dessus d'une ligne 6 passant par l'axe 43 autour duquel la première extrémité 41 de la bielle 40 pivote et l'axe de pivotement 34. Ainsi, les moyens de déplacement 30 sont naturellement maintenus dans leur position stable de fermeture sous l'action du ressort 47 et du moyen de rappel 5. Conformément à la figure 8, dans la position relevée intermédiaire du bouton d'ouverture 50a, la deuxième extrémité d'entrainement profilée 54c du bras de levier long 52c commence à entraîner la deuxième surface de réception 33b tandis que la première extrémité d'entrainement profilée 54b du bras de levier court 52b commence à quitter la première surface de réception 33a, l'axe 44 étant situé sur la ligne 6 passant par l'axe 43 et l'axe de pivotement 34. Ainsi, les moyens de déplacement sont dans leur position intermédiaire d'équilibre instable et sont prêts à passer vers leur position stable d'ouverture.

Tel que visible aux figures 8 et 9, la deuxième extrémité d'entrainement profilée 54c du bras de levier long 52c est adaptée à venir en contact contre la deuxième surface de réception 33b portée par le levier 35 et provoque une deuxième course longue du levier 35 lorsque le bouton d'ouverture 50a est manœuvré de la position relevée intermédiaire (cf. figure 8) à la position relevée (cf. figure 9). Le bras de levier long 52c est adapté à appliquer, sur la deuxième course longue, une deuxième force sur la deuxième surface de réception 33b pour faire déplacer les moyens de déplacement de leur position intermédiaire d'équilibre instable à leur position stable d'ouverture. Conformément à la figure 9, dans la position relevée du bouton d'ouverture 50a, l'axe 44 est situé au-dessous de la ligne 6 passant par l'axe 43 et l'axe de pivotement 34. Ainsi, le levier 35 est entrainé vers sa position d'ouverture sous l'action de la deuxième force. Le déplacement du levier 35 de la position de fermeture à la position d'ouverture entraine, par l'intermédiaire de la bielle 40, le verrou 20 vers sa position ouverte. Par conséquence, la poignée amovible 1 est déverrouillée du récipient de cuisson 60.

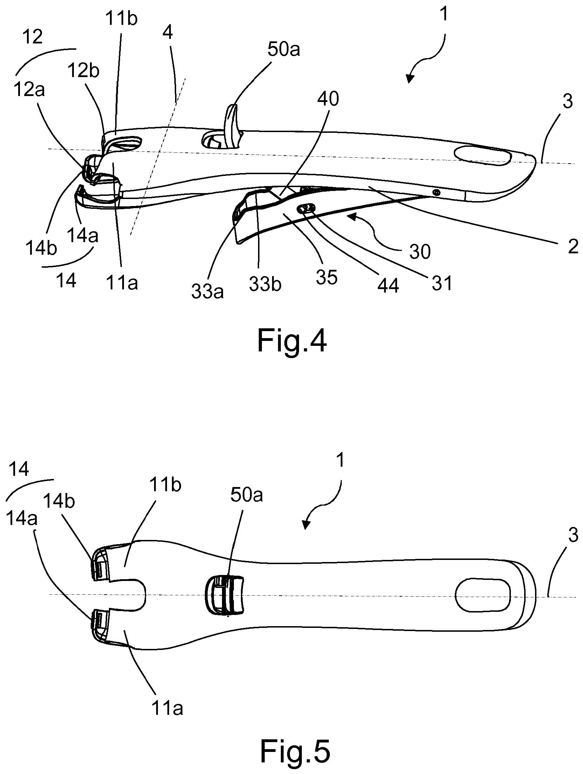

A la fin de la deuxième course longue du bras de levier long 52c, sous l'action du ressort 47 et du moyen de rappel 5, le levier 35 est amené de sa position d'ouverture dans laquelle le deuxième organe de poussée 50c n'exerce plus de force sur le levier à sa position complètement ouverte comme illustré à la figure 4.

En fonctionnement, pour désassembler la poignée amovible 1 du récipient de cuisson 60, l'utilisateur saisit le corps de préhension 2 et relève le bouton d'ouverture 50a en appliquant un couple avec le pouce pour faire pivoter les premier et deuxième organes de poussée 50b et 50c qui comportent respectivement le bras de levier court 52b et le bras de levier long 52c. Ainsi, la première extrémité d'entraînement profilée 54b du bras de levier court 52b applique, sur la première course courte, la première force sur la première surface de réception 33a pour faire passer le levier 35 de sa position de fermeture à sa position intermédiaire d'équilibre instable. La deuxième extrémité d'entrainement profilée 54c du bras de levier long 52c applique, sur la deuxième course longue, la deuxième force sur la deuxième surface de réception 33b pour faire passer le levier 35 de sa position intermédiaire d'équilibre instable à sa position d'ouverture. Le passage du levier 35 de sa position de fermeture à sa position d'ouverture provoque par l'intermédiaire de la bielle 40 le déplacement du verrou 20 de sa position fermée à sa position ouverte.

Pour assembler la poignée amovible 1 sur le récipient de cuisson 60, l'utilisateur saisit le corps de préhension 2 et suivant le même mode opératoire que celui décrit ci-dessus amène le verrou 20 dans sa position ouverte. Ainsi, la paroi de blocage 21 est éloignée de l'organe d'appui interne 12. Il introduit le rebord recourbé 64 et la paroi latérale 61 entre l'organe d'appui interne 12 et l'organe d'appui 14 pour amener la portion intermédiaire verticale 65 contre les zones d'appui internes 12a, 12b et la surface extérieure 63 de la paroi latérale 61 contre les zones d'appui externes 14a, 14b. Ensuite, il appuie sur le levier 35 pour le faire passer de sa position d'ouverture à sa position de fermeture et ainsi entrainer le verrou 20 de sa position ouverte à sa position fermée dans laquelle les première et deuxième parties d'appui 21a, 21b formant la paroi de blocage 21 prennent appui contre l'extrémité libre tombante 67 du bord d'extrémité 66 et ainsi bloquent le rebord recourbé 64 contre les organes d'appui interne et externe 12, 14. En conséquence, la poignée amovible 1 est immobilisée sur le récipient de cuisson 60.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, les premier et deuxième organes de poussée portés par les moyens d'ouverture comportent respectivement une came courte et une came longue, la came courte étant adaptée à appliquer la première force sur les moyens de déplacement et la came longue étant adaptée à appliquer la deuxième force sur les moyens de déplacement qui forment un suiveur mis en mouvement par les cames.

De manière réciproque, les moyens d'ouverture peuvent comporter un seul levier qui est adapté à appliquer une force sur les premier et deuxième organes de poussée qui sont portés par les moyens de déplacement. Les premier et deuxième organes de poussée peuvent comporter respectivement un profil de came court et un profil de came long.

Dans une autre variante de réalisation, l'organe d'appui fixe destiné à venir contre la paroi latérale est formé par un mors fixe et l'organe de verrouillage est formé par une pince mobile.

## Revendications

1. Poignée amovible (1) destinée à coopérer avec un récipient de cuisson (60) ayant une paroi latérale (61), ladite poignée amovible (1) s'étendant selon une direction longitudinale (3) et comprenant au moins un organe d'appui (12, 14) fixe destiné à venir contre la paroi latérale (61) et un organe de verrouillage (20), mobile entre une position ouverte dans laquelle la poignée amovible (1) est désolidarisée de la paroi latérale (61) et une position fermée, dans laquelle la poignée amovible (1) est immobilisée sur la paroi latérale (61), ladite poignée amovible (1) comportant des moyens de déplacement (30) de l'organe de verrouillage (20) configurés de façon à pouvoir passer d'une position stable de fermeture à une position stable d'ouverture, et inversement, en passant par une position intermédiaire d'équilibre instable, et des moyens d'ouverture (50) de l'organe de verrouillage (20) destinés à entrainer les moyens de déplacement (30) initialement dans leur position stable de fermeture au-delà de leur position intermédiaire d'équilibre instable, les moyens d'ouverture (50) comportant un bouton d'ouverture (50a) mobile en rotation selon un axe (51), transversal à la direction longitudinale (3) et contenu dans un plan horizontal, **caractérisée en ce que** ledit bouton d'ouverture (50a) est mobile entre une position abaissée de repos dans laquelle les moyens de déplacement (30) sont dans la position stable de fermeture et une position relevée dans laquelle les moyens de déplacement (30) sont dans la position stable d'ouverture.

2. Poignée amovible (1) selon la revendication 1, **caractérisée en ce que** le bouton d'ouverture (50a) est mobile entre la position abaissée de repos et la position relevée en passant par une position relevée intermédiaire et **en ce que** les moyens d'ouverture (50) comportant au moins un premier organe de poussée (50b) et au moins un deuxième organe de poussée (50c), le premier organe de poussée (50b) agissant sur les moyens de déplacement (30) entre sa position stable de fermeture et sa position intermédiaire d'équilibre instable lorsque le bouton d'ouverture (50a) est manœuvré de la position abaissée de repos à la position relevée intermédiaire et le deuxième organe de poussée (50c) agissant sur les moyens de déplacement (30) entre sa position intermédiaire d'équilibre instable et sa position stable d'ouverture lorsque le bouton d'ouverture (50a) est manœuvré de la position relevée intermédiaire à la position relevée.

3. Poignée amovible (1) selon la revendication 2, **caractérisée en ce que** le premier organe de poussée (50b) est adapté, quand le bouton d'ouverture (50) est soumis à l'action d'un couple fourni par l'utilisateur, à appliquer une première force sur les moyens de déplacement (30) pour les faire passer de la position stable de fermeture à la position intermédiaire d'équilibre instable, et **en ce que** le deuxième organe de poussée (50c) est adapté, quand le bouton est soumis à l'action d'un couple fourni par l'utilisateur, à appliquer une deuxième force sur les moyens de déplacement (30) pour les faire passer de la position intermédiaire d'équilibre instable à la position stable d'ouverture.

4. Poignée amovible (1) selon la revendication 3, **caractérisée en ce que**, sous l'action d'un même couple fourni par l'utilisateur au bouton d'ouverture (50a), la valeur de la première force appliquée sur les moyens de déplacement (30) est supérieure à la valeur de la deuxième force sur les moyens de déplacement (30).

5. Poignée amovible (1) selon l'une quelconque des revendications 2 à 4, **caractérisée en ce que** les premier et deuxième organes de poussée (50b, 50c), quand ils sont déplacés sous l'action d'un utilisateur via le bouton d'ouverture (50a), sont adaptés à venir respectivement en contact contre des première et deuxième surfaces de réception (33a, 33b) portées par les moyens de déplacement (30), et à déplacer respectivement les première et deuxième surfaces de réception (33a, 33b) de façon à entraîner les moyens de déplacement (30) vers leur position stable d'ouverture.

6. Poignée amovible (1) selon l'une quelconque des revendications 2 à 5, **caractérisée en ce que** les premier et deuxième organes de poussée (50b, 50c) sont agencés de part et d'autre du bouton d'ouverture (50a) le long de l'axe transversal (51).

7. Poignée amovible (1) selon l'une quelconque des revendications 2 à 6, **caractérisée en ce que** le premier et le deuxième organe de poussée (50b, 50c) comportent respectivement un bras de levier court (52b) et un bras de levier long (52c), et **en ce que** le bras de levier court (52b) est adapté à appliquer la première force sur les moyens de déplacement (30) et le bras de levier long (52b) est adapté à appliquer la deuxième force sur les moyens de déplacement (30).

8. Poignée amovible (1) selon la revendication 7, **caractérisée en ce que** le bras de levier court (52b) comprend une première extrémité d'entraînement profilée (54b) adaptée pour assurer le contact avec la première surface de réception (33a) et le bras de levier long (52c) comprend une deuxième extrémité (54c) adaptée pour assurer le contact avec la deuxième surface de réception (33b).

9. Poignée amovible (1) selon l'une quelconque des revendications 2 à 6, **caractérisée en ce que** le premier et le deuxième organe de poussée (50b, 50c) comportent respectivement une came courte et une came longue, la came courte étant adaptée à appliquer la première force sur les moyens de déplacement (30) et la came longue étant adaptée à appliquer la deuxième force sur les moyens de déplacement (30).

10. Poignée amovible (1) selon l'une quelconque des revendications 1 à 9, **caractérisée en ce que** les moyens de déplacement (30) comprennent un levier (35) mobile selon un axe de pivotement (34) s'étendant selon une direction transversale (4) à la direction longitudinale (3), entre une position de fermeture et une position d'ouverture en passant par une position intermédiaire d'équilibre instable.

11. Poignée amovible (1) selon la revendication 10, dépendante de la revendication 5, **caractérisée en ce que** les première et deuxième surfaces de réception (33a, 33b) sont portées par le levier (35).

12. Poignée amovible (1) l'une quelconque des revendications 1 à 11, **caractérisée en ce que** le bouton d'ouverture (50a) est pivotant sur une course angulaire entre la position abaissée de repos et la position relevée comprise entre 40 et 70°, de préférence 60° par rapport à la direction longitudinale (3).

13. Poignée amovible (1) selon l'une quelconque des revendications 1 à 12, **caractérisée en ce que** les moyens de déplacement (30) comportent une bielle (40) reliée à l'organe de verrouillage (20) et un ressort (47) relié à la bielle (40), ledit ressort (47) étant destiné à adapter la position de l'organe de verrouillage (20) à l'épaisseur de la paroi latérale (61).

14. Poignée amovible (1) selon l'une quelconque des revendications 1 à 13, **caractérisée en ce qu'**elle comprend au moins deux organes d'appui (12, 14) fixes destinés à venir contre la paroi latérale (61) et un organe de verrouillage (20), mobile entre une position ouverte dans laquelle la paroi latérale (61) est susceptible de s'engager entre les au moins deux organes d'appui (12 , 14) et une position fermée, dans laquelle la paroi latérale (61) est enserrée entre les au moins deux organes d'appui (12, 14) de manière à immobiliser la poignée amovible (1) sur la paroi latérale (61).

## Patentansprüche

1. Abnehmbarer Griff (1), der dazu bestimmt ist, mit einem Kochbehälter (60) zusammenzuwirken, der eine Seitenwand (61) aufweist, wobei sich der abnehmbare Griff (1) in einer Längsrichtung (3) erstreckt und mindestens ein festes Anlegeorgan (12, 14), das dazu bestimmt ist, sich an der Seitenwand (61) anzulegen, und ein Verriegelungsorgan (20) umfasst, das zwischen einer offenen Position, in der der abnehmbare Griff (1) von der Seitenwand (61) gelöst ist, und einer geschlossenen Position beweglich ist, in der der abnehmbare Griff (1) an der Seitenwand (61) festgehalten ist, wobei der abnehmbare Griff (1) Mittel zum Verschieben (30) des Verriegelungsorgans (20) umfasst, die derart konfiguriert sind, um von einer stabilen Schließposition in eine stabile Öffnungsposition, und umgekehrt, über eine instabile Gleichgewichtszwischenposition übergehend, überzugehen, und Mittel zum Öffnen (50) des Verriegelungsorgans (20), die dazu bestimmt sind, die Mittel zum Verschieben (30) ursprünglich in ihrer stabilen Schließposition über deren instabile Gleichgewichtszwischenposition hinaus anzutreiben, wobei die Mittel zum Öffnen (50) einen Öffnungsknopf (50a) umfassen, der entlang einer Achse (51) quer zur Längsrichtung (3) und in einer horizontalen Ebene gelegen drehbeweglich ist, **dadurch gekennzeichnet, dass** der Öffnungsknopf (50a) zwischen einer abgesenkten Ruheposition, in der die Mittel zum Verschieben (30) in der stabilen Schließposition sind, und einer angehobenen Position beweglich sind, in der die Mittel zum Verschieben (30) in der stabilen Öffnungsposition sind.

2. Abnehmbarer Griff (1) nach Anspruch 1, **dadurch gekennzeichnet, dass** der Öffnungsknopf (50a) zwischen der abgesenkten Ruheposition und der angehobenen Position, über eine angehobene Zwischenposition übergehend beweglich ist, und dadurch, dass die Mittel zum Öffnen (50) mindestens ein erstes Schiebeorgan (50b) und mindestens ein zweites Schiebeorgan (50c) umfassen, wobei das erste Schiebeorgan (50b) auf die Mittel zum Verschieben (30) zwischen ihrer stabilen Schließposition und ihrer instabilen Gleichgewichtszwischenposition einwirken, wenn der Öffnungsknopf (50a) von der abgesenkten Ruheposition in die angehobene Zwischenposition betätigt wird, und das zweite Schiebeorgan (50c) auf die Mittel zum Verschieben (30) zwischen ihrer instabilen Gleichgewichtszwischenposition und ihrer stabilen Öffnungsposition einwirken, wenn der Öffnungsknopf (50a) von der angehobenen Zwischenposition in die angehobene Position betätigt wird.

3. Abnehmbarer Griff (1) nach Anspruch 2, **dadurch gekennzeichnet, dass** das erste Schiebeorgan (50b), wenn der Öffnungsknopf (50) dem Einwirken eines durch den Nutzer bereitgestellten Moments unterliegt, angepasst ist, eine erste Kraft an die Mittel zum Verschieben (30) anzulegen, um sie von der stabilen Schließposition in die instabile Gleichgewichtszwischenposition übergehen zu lassen, und dadurch, dass das zweite Schiebeorgan (50c), wenn der Knopf dem Einwirken eines durch den Nutzer bereitgestellten Moments unterliegt, angepasst ist, eine zweite Kraft an die Mittel zum Verschieben (30) anzulegen, um sie von der instabilen Gleichgewichtszwischenposition in die stabile Öffnungsposition übergehen zu lassen.

4. Abnehmbarer Griff (1) nach Anspruch 3, **dadurch gekennzeichnet, dass** unter dem Einwirken eines selben durch den Nutzer bereitgestellten Moments auf den Öffnungsknopf (50a), der Wert der ersten an die Mittel zum Verschieben (30) angelegten Kraft größer ist als der Wert der zweiten an die Mittel zum Verschieben (30) angelegten Kraft.

5. Abnehmbarer Griff (1) nach einem der Ansprüche 2 bis 4, **dadurch gekennzeichnet, dass** das erste und zweite Schiebeorgan (50b, 50c), wenn sie unter der Einwirkung eines Nutzers über den Öffnungsknopf (50a) verschoben werden, angepasst sind, jeweils in Kontakt an erste und zweite Aufnahmeoberflächen (33a, 33b), die von den Mitteln zum Verschieben (30) getragen werden, zu kommen, und die erste und zweite Aufnahmeoberfläche (33a, 33b) jeweils so zu verschieben, um die Mittel zum Verschieben (30) in ihre stabile Öffnungsposition anzutreiben.

6. Abnehmbarer Griff (1) nach einem der Ansprüche 2 bis 5, **dadurch gekennzeichnet, dass** das erste und zweite Schiebeorgan (50b, 50c) beiderseits des Öffnungsknopfes (50a) entlang der Querachse (51) angeordnet sind.

7. Abnehmbarer Griff (1) nach einem der Ansprüche 2 bis 6, **dadurch gekennzeichnet, dass** das erste und zweite Schiebeorgan (50b, 50c) jeweils einen kurzen Hebelarm (52b) und einen langen Hebelarm (52c) umfassen, und dadurch, dass der kurze Hebelarm (52b) angepasst ist, um die erste Kraft an die Mittel zum Verschieben (30) anzulegen und der lange Hebelarm (52c) angepasst ist, um die zweite Kraft an die Mittel zum Verschieben (30) anzulegen.

8. Abnehmbarer Griff (1) nach Anspruch 7, **dadurch gekennzeichnet, dass** der kurze Hebelarm (52b) ein erstes profiliertes Antriebsende (54b) umfasst, das angepasst ist, um für den Kontakt mit der ersten Aufnahmeoberfläche (33a) zu sorgen, und der lange Hebelarm (52c) ein zweites Ende (54c) umfasst, das angepasst ist, um für den Kontakt mit der zweiten Aufnahmeoberfläche (33b) zu sorgen.

9. Abnehmbarer Griff (1) nach einem der Ansprüche 2 bis 6, **dadurch gekennzeichnet, dass** das erste und zweite Schiebeorgan (50b, 50c) jeweils einen kurzen Nocken und einen langen Nocken umfassen, wobei der kurze Nocken angepasst ist, um die erste Kraft an die Mittel zum Verschieben (30) anzulegen und der lange Nocken angepasst ist, um die zweite Kraft an die Mittel zum Verschieben (30) anzulegen.

10. Abnehmbarer Griff (1) nach einem der Ansprüche 1 bis 9, **dadurch gekennzeichnet, dass** die Mittel zum Verschieben (30) einen Hebel (35) umfassen, der entlang einer Schwenkachse (34), die sich in einer Querrichtung (4) zur Längsrichtung (3) erstreckt, zwischen einer Schließposition und einer Öffnungsposition, über eine instabile Gleichgewichtszwischenposition übergehend beweglich ist.

11. Abnehmbarer Griff (1) nach Anspruch 10, von Anspruch 5 abhängig, **dadurch gekennzeichnet, dass** die erste und zweite Aufnahmeoberfläche (33a, 33b) von dem Hebel (35) getragen werden.

12. Abnehmbarer Griff (1) nach einem der Ansprüche 1 bis 11, **dadurch gekennzeichnet, dass** der Öffnungsknopf (50a) auf einem Winkelweg zwischen der abgesenkten Ruheposition und der angehobenen Position, der zwischen 40 und 70° enthalten ist, vorzugsweise 60° in Bezug auf die Längsrichtung (3) beträgt, schwenkbar ist.

13. Abnehmbarer Griff (1) nach einem der Ansprüche 1 bis 12, **dadurch gekennzeichnet, dass** die Mittel zum Verschieben (30) eine Triebstange (40) umfassen, die an das Verriegelungsorgan (20) angeschlossen ist, und eine Feder (47), die an die Triebstange (40) angeschlossen ist, wobei die Feder (47) dazu bestimmt ist, die Position des Verriegelungsorgans (20) an die Dicke der Seitenwand (61) anzupassen.

14. Abnehmbarer Griff (1) nach einem der Ansprüche 1 bis 13, **dadurch gekennzeichnet, dass** er mindestens zwei feste Anlegeorgane (12, 14) umfasst, die dazu bestimmt sind, sich an der Seitenwand (61) anzulegen und ein Verriegelungsorgan (20), das zwischen einer offenen Position, in der die Seitenwand (61) in der Lage ist, zwischen den mindestens zwei Anlegeorgane (12, 14) einzugreifen, und einer geschlossenen Position beweglich ist, in der die Seitenwand (61) zwischen den mindestens zwei Anlegeorganen (12, 14) derart eingeklemmt ist, um den abnehmbaren Griff (1) an der Seitenwand (61) festzuhalten.

## Claims

1. Removable handle (1) intended to engage with a cooking vessel (60) having a side wall (61), said removable handle (1) extending in a longitudinal direction (3) and comprising at least one fixed support member (12, 14) intended to come against the side wall (61) and a locking member (20), movable between an open position wherein the removable handle (1) is disconnected from the side wall (61) and a closed position, wherein the removable handle (1) is immobilised on the side wall (61), said removable handle (1) comprising means for moving (30) the locking member (20) configured so as to be able to pass from a closing stable position to an opening stable position, and conversely, by passing through an unstable balancing intermediate position, and means for opening (50) the locking member (20) intended to drive the movement means (30) initially in their closing stable position beyond their unstable balancing intermediate position, the opening means (50) comprising an opening button (50a) movable in rotation about an axis (51), transverse to the longitudinal direction (3) and contained in a horizontal plane, **characterised in that** said opening button (50a) is movable between a lowered rest position wherein the movement means (30) are in the closing stable position and a raised position wherein the movement means (30) are in the opening stable position.

2. Removable handle (1) according to claim 1, **characterised in that** the opening button (50a) is movable between the lowered rest position and the raised position by passing through an intermediate raised position and **in that** the opening means (50) comprising at least one first thrust member (50b) and at least one second thrust member (50c), the first thrust member (50b) acting on the movement means (30) between its closing stable position and its unstable balancing intermediate position when the opening button (50a) is moved from the lowered rest position to the intermediate raised position and the second thrust member (50c) acting on the means for moving (30) between its unstable balancing intermediate position and its opening stable position when the opening button (50a) is moved from the intermediate raised position to the raised position.

3. Removable handle (1) according to claim 2, **characterised in that** the first thrust member (50b) is adapted, when the opening button (50) is subjected to the action of a torque provided by the user, to apply a first force on the movement means (30) to make them pass from the closing stable position to the unstable balancing intermediate position, and **in that** the second thrust member (50c) is adapted, when the button is subjected to the action of a torque provided by the user, to apply a second force on the movement means (30) to make them pass from the unstable balancing intermediate position to the opening stable position.

4. Removable handle (1) according to claim 3, **characterised in that**, under the action of one same torque provided by the user to the opening button (50a), the value of the first force applied on the movement means (30) is greater than the value of the second force on the movement means (30).

5. Removable handle (1) according to any one of claims 2 to 4, **characterised in that** the first and second thrust members (50b, 50c), when they are moved under the action of a user via the opening button (50a), are adapted to come respectively into contact against the first and second receiving surfaces (33a, 33b) carried by the movement means (30), and to move respectively the first and second receiving surfaces (33a, 33b) so as to drive the movement means (30) to their opening stable position.

6. Removable handle (1) according to any one of claims 2 to 5, **characterised in that** the first and second thrust members (50b, 50c) are arranged on either side of the opening button (50a) along the transverse axis (51).

7. Removable handle (1) according to any one of claims 2 to 6, **characterised in that** the first and the second thrust member (50b, 50c) comprise respectively a short lever arm (52b) and a long lever arm (52c), and **in that** the short lever arm (52b) is adapted to apply the first force on the movement means (30) and the long lever arm (52b) is adapted to apply the second force on the movement means (30).

8. Removable handle (1) according to claim 7, **characterised in that** the short lever arm (52b) comprises a first profiled drive end (54b) adapted to ensure the contact with the first receiving surface (33a) and the long lever arm (52c) comprises a second end (54c) adapted to ensure the contact with the second receiving surface (33b).

9. Removable handle (1) according to any one of claims 2 to 6, **characterised in that** the first and the second thrust member (50b, 50c) comprise respectively a short cam and a long cam, the short cam being adapted to apply the first force on the movement means (30) and the long cam being adapted to apply the second force on the movement means (30).

10. Removable handle (1) according to any one of claims 1 to 9, **characterised in that** the movement means (30) comprise a lever (35) movable about a pivot axis (34) extending along a transverse direction (4) to the longitudinal direction (3), between a closing position and an opening position by passing through an unstable balancing intermediate position.

11. Removable handle (1) according to claim 10, dependent on claim 5, **characterised in that** the first and second receiving surfaces (33a, 33b) are carried by the lever (35).

12. Removable handle (1) according to any one of claims 1 to 11, **characterised in that** the opening button (50a) is pivoting on an angular stroke between the lowered rest position and the raised position comprised between 40 and 70°, preferably 60° with respect to the longitudinal direction (3).

13. Removable handle (1) according to any one of claims 1 to 12, **characterised in that** the movement means (30) comprise a rod (40) connected to the locking member (20) and a spring (47) connected to the rod (40), said spring (47) being intended to adapt the position of the locking member (20) to the thickness of the side wall (61).

14. Removable handle (1) according to any one of claims 1 to 13, **characterised in that** it comprises at least two fixed support members (12, 14) intended to come against the side wall (61) and a locking member (20), movable between an open position wherein the side wall (61) can be engaged between the at least two support members (12, 14) and a closed position, wherein the side wall (61) is surrounded between the at least two support members (12, 14) so as to immobilise the removable handle (1) on the side wall (61).
